# EUROPEAN PATENT APPLICATION

(11) **EP 2 981 141 A1**
(43) Date of publication of application: **03.02.2016**
(21) Application number: 14776503.6
(22) Date of filing: 24.03.2014
(51) Int. Cl.: H04W 72/04

(54) **BASE STATION, PROCESSOR, AND COMMUNICATION CONTROL METHOD**

(30) Priority: 25.03.2013 US 201361805011 P
(71) Applicant: Kyocera Corporation, Kyoto-shi, Kyoto 612-8501 (JP)
(72) Inventor: MATSUMOTO, Naohisa, Kyoto-shi Kyoto 612-8501 (JP)
(74) Representative: Schwabe - Sandmair - Marx
(86) International application number: PCT/JP2014/058056
(87) International publication number: WO 2014/157073

(57) **Abstract**

An eNB 200 according to the present invention manages a cell in a mobile communication system. The eNB 200 transmits a CRS used for channel state measurement of a downlink, and comprises: a transceiver 210 configured to receive, from each of a plurality of UEs 100 connected to the cell, information indicating a Release with which the UE 100 complies; and a processor 240 configured to control transmission of the CRS on the basis of a Release with which each of the plurality of UEs 100 comply.

## Description

### TECHNICAL FIELD

The present invention relates to a base station, a processor, and a communication control method used in a mobile communication system.

### BACKGROUND ART

In 3GPP (3rd Generation Partnership Project) which is a project aiming to standardize a mobile communication system, the introduction of a new carrier structure after Release 12 has been considered.

As one of the new carrier structures, it has been considered to further reduce a cell-specific reference signal (CRS) than a conventional carrier structure (see, Non Patent Literature 1, for example). As a result, a radio resource used for transmitting the cell-specific reference signal can be used for transmitting user data, etc., and therefore, it is possible to improve throughput.

### PRIOR ART DOCUMENT

### Non-PATENT DOCUMENT

[Non Patent Literature 1] 3GPP contribution "R1-113289"

### SUMMARY OF THE INVENTION

A user terminal that establishes a connection with a cell receives a cell-specific reference signal transmitted in the cell, and channel state measurement of a downlink is performed.

Therefore, when a cell-specific reference signal is reduced in a new carrier structure, a conventional user terminal (low-capability user terminal) that does not support the new carrier structure may not be able to perform a normal channel state measurement.

Therefore, the present invention provides a base station, a processor, and a communication control method, with which it is possible to introduce a new carrier structure while securing a backward compatibility.

A base station according to the present invention manages a cell in a mobile communication system. The base station comprises: a transmission unit configured to transmit a cell-specific reference signal used for channel state measurement of a downlink; a reception unit configured to receive, from each of a plurality of user terminals connected to the cell, information indicating a communication capability of its own terminal; and a control unit configured to control transmission of the cell-specific reference signal on the basis of the communication capability of each of the plurality of user terminals.

### BRIEF DESCRIPTION OF THE DRAWINGS

[Fig. 1] Fig. 1 is a configuration diagram of an LTE system according to the embodiment.
[Fig. 2] Fig. 2 is a block diagram of the UE according to the embodiment.
[Fig. 3] Fig. 3 is a block diagram of the eNB according to the embodiment.
[Fig. 4] Fig. 4 is a protocol stack diagram of a radio interface in the LTE system.
[Fig. 5] Fig. 5 is a configuration diagram of a radio frame used in the LTE system.
[Fig. 6] Fig. 6 is a frame configuration diagram showing an arrangement example of the cell-specific reference signal (CRS).
[Fig. 7] Fig. 7 is a diagram showing an arrangement example of the CRS in one subframe and one resource block.
[Fig. 8] Fig. 8 is a diagram showing an operation environment according to the embodiment.
[Fig. 9] Fig. 9 is an operation flow chart of the eNB according to the embodiment.
[Fig. 10] Fig. 10 is a diagram for describing a specific example of the CRS transmission according to the embodiment.

### DESCRIPTION OF THE EMBODIMENT

### [Overview of Embodiment]

A base station according to the embodiment manages a cell in a mobile communication system. The base station comprises: a transmission unit configured to transmit a cell-specific reference signal used for channel state measurement of a downlink; a reception unit configured to receive, from each of a plurality of user terminals connected to the cell, information indicating a communication capability of its own terminal; and a control unit configured to control transmission of the cell-specific reference signal on the basis of the communication capability of each of the plurality of user terminals.

In the embodiment, the control unit performs control to partially transmit the cell-specific reference signal when a low-capability user terminal is included in the plurality of user terminals, the low-capability user terminal being not capable of performing the channel state measurement unless the cell-specific reference signal is received.

In the embodiment, the cell-specific reference signal is also used for received power measurement of a downlink. The transmission unit includes a plurality of transmission antennas. When the low-capability user terminal is included in the plurality of user terminals, the control unit performs control, for the received power measurement, to entirely transmit the cell-specific reference signal from one transmission antenna out of the plurality of transmission antennas, and to partially transmit the cell-specific reference signal from each of the remaining transmission antennas.

In the embodiment, the control unit performs control to stop transmitting the cell-specific reference signal when the low-capability user terminal is not included in the plurality of user terminals.

In the embodiment, the cell-specific reference signal is also used for received power measurement of a downlink. The transmission unit includes a plurality of transmission antennas. When the low-capability user terminal is not included in the plurality of user terminals, the control unit performs control, for the received power measurement, to continue to transmit the cell-specific reference signal from one transmission antenna out of the plurality of transmission antennas, and to stop transmitting the cell-specific reference signal from each of the remaining transmission antennas.

In the embodiment, when the low-capability user terminal is included in the plurality of user terminals, as a report to the base station regarding channel state information obtained by the channel state measurement, the control unit does not set a periodic report to the low-capability user terminal but sets an aperiodic report to the low-capability user terminal.

In the embodiment, when the low-capability user terminal is included in the plurality of user terminals, the control unit controls a timing of the channel state measurement in the low-capability user terminal so that the channel state measurement for reporting the channel state information is performed at a timing of transmitting the cell-specific reference signal.

In the embodiment, when the low-capability user terminal is included in the plurality of user terminals, the control unit allocates a radio resource including the cell-specific reference signal to the low-capability user terminal so that the low-capability user terminal is capable of decoding downlink data by utilizing the cell-specific reference signal.

In the embodiment, when a high-capability user terminal is further included in the plurality of user terminals, the high-capability user terminal being capable of performing the channel state measurement without a need of receiving the cell-specific reference signal, the control unit performs control to notify the high-capability user terminal of information indicating a radio resource including the cell-specific reference signal.

A processor according to the embodiment is provided in a base station configured to manage a cell in a mobile communication system. The processor executes: a process of transmitting a cell-specific reference signal used for channel state measurement of a downlink; a process of receiving, from each of a plurality of user terminals connected to the cell, information indicating a communication capability of its own terminal; and a process of controlling transmission of the cell-specific reference signal on the basis of the communication capability of each of the plurality of user terminals.

A communication control method according to the embodiment is used for a base station configured to manage a cell in a mobile communication system. The communication control method comprises: a step of transmitting a cell-specific reference signal used for channel state measurement of a downlink; a step of receiving, from each of a plurality of user terminals connected to the cell, information indicating a communication capability of its own terminal; and a step of controlling transmission of the cell-specific reference signal on the basis of the communication capability of each of the plurality of user terminals.

### [Embodiment]

Hereinafter, with reference to the accompanying drawings, a description will be provided for an embodiment in a case where the present invention is applied to an LTE (Long Term Evolution) system which is one of the mobile communication systems configured to comply with the 3GPP standards.

### (Configuration of LTE system)

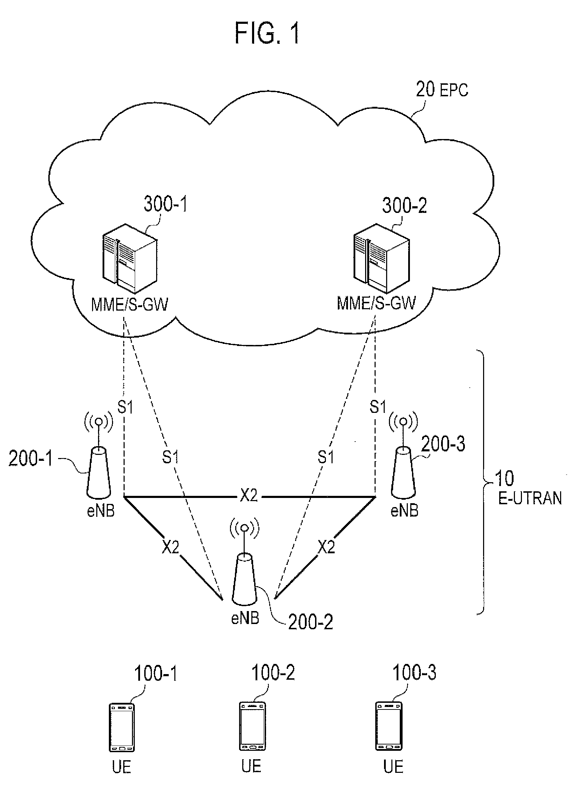

Fig. 1 is a configuration diagram of an LTE system according to the present embodiment. As illustrated in Fig. 1, the LTE system includes a plurality of UEs (User Equipment) 100, E-UTRAN (Evolved-UMTS Terrestrial Radio Access Network) 10, and EPC (Evolved Packet Core) 20. The E-UTRAN 10 corresponds to a radio access network and the EPC 20 corresponds to a core network. The E-UTRAN 10 and the EPC 20 configure a network of the LTE system.

The UE 100 is a mobile communication device and performs radio communication with a serving cell. The UE 100 corresponds to the user terminal.

The E-UTRAN 10 includes a plurality of eNBs 200 (evolved Node-B). The eNB 200 corresponds to a base station. Each eNB 200 manages one or a plurality of cells and performs radio communication with the UE 100 which establishes a connection with the cell of the eNB 200. It is noted that the "cell" is used as a term indicating a minimum unit of a radio communication area, and is also used as a term indicating a function of performing radio communication with the UE 100.

The eNB 200, for example, has a radio resource management (RRM) function, a routing function of user data, and a measurement control function for mobility control and scheduling.

The EPC 20 includes a plurality of MME (Mobility Management Entity)/S-GWs (Serving-Gateway) 300. The MME is a network node for performing various mobility controls and the like for the UE 100 and corresponds to a controller. The S-GW is a network node that performs transfer control of user data and corresponds to a mobile switching center. The EPC 20 including the MME/S-GW 300 accommodates the eNB 200.

The eNBs 200 are connected to one another via an X2 interface. Furthermore, the eNB 200 is connected to the MME/S-GW 300 via an S1 interface.

Next, the configurations of the UE 100 and the eNB 200 will be described.

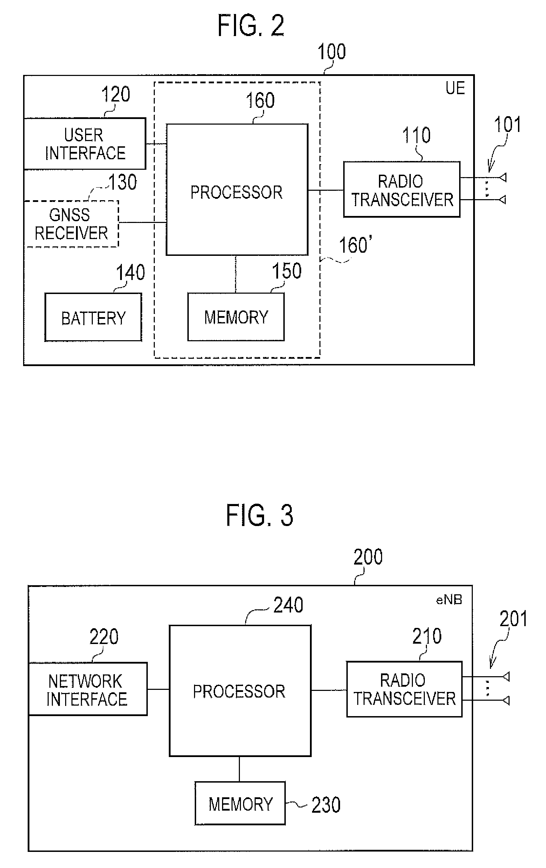

Fig. 2 is a block diagram of the UE 100. As illustrated in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 and the processor 160 configure a control unit. The UE 100 may not have the GNSS receiver 130. Furthermore, the memory 150 may be integrally formed with the processor 160, and this set (that is, a chip set) may be called a processor 160'.

The plurality of antennas 101 and the radio transceiver 110 are used to transmit and receive a radio signal. The radio transceiver 110 converts a baseband signal output from the processor 160 into the radio signal, and transmits the radio signal from the plurality of antennas 101. Furthermore, the radio transceiver 110 converts the radio signal received by the plurality of antennas 101 into the baseband signal, and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various controls by executing the program stored in the memory 150. The processor 160 may further include a codec that performs encoding and decoding on sound and video signals. The processor 160 executes various controls and various communication protocols, which will be described later.

Fig. 3 is a block diagram of the eNB 200. As illustrated in Fig. 3, the eNB 200 includes a plurality of antennas 201, a radio transceiver 210, a network interface 220, a memory 230, and a processor 240. The memory 230 and the processor 240 constitute a control unit.

The plurality of antennas 201 and the radio transceiver 210 are used to transmit and receive a radio signal. The radio transceiver 210 converts a baseband signal output from the processor 240 into the radio signal, and transmits the radio signal from the plurality of antennas 201. The plurality of antennas 201 and the radio transceiver 210 configure a transmission unit and a reception unit. Furthermore, the radio transceiver 210 converts the radio signal received by the plurality of antennas 201 into the baseband signal, and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various controls by executing the program stored in the memory 230. The processor 240 executes various processes and various communication protocols, which will be described later.

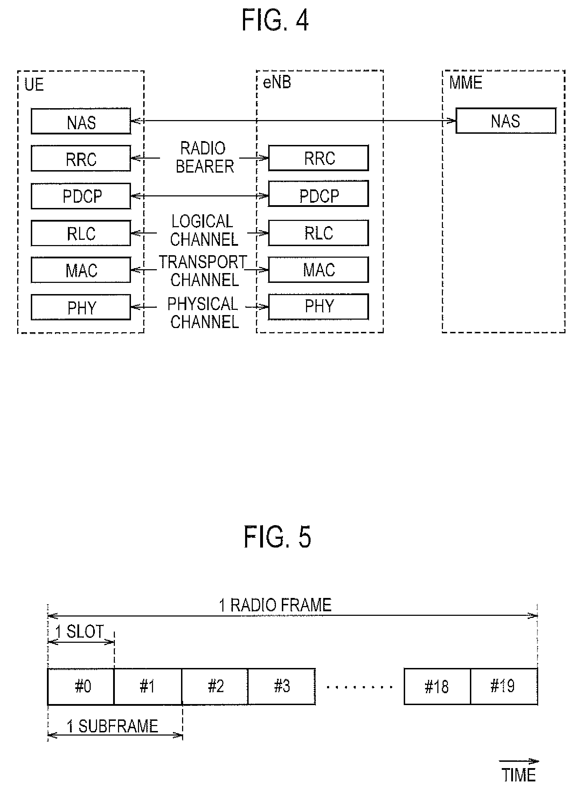

Fig. 4 is a protocol stack diagram of a radio interface in the LTE system. As illustrated in Fig. 4, the radio interface protocol is classified into a layer 1 to a layer 3 of an OSI reference model, wherein the layer 1 is a physical (PHY) layer. The layer 2 includes an MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data is transmitted via the physical channel.

The MAC layer performs priority control of data, and a retransmission process and the like by hybrid ARQ (HARQ). Between the MAC layer of the UE 100 and the MAC layer of the eNB 200, data is transmitted via a transport channel. The MAC layer of the eNB 200 includes a transport format of an uplink and a downlink (a transport block size and a modulation and coding scheme (MCS)) and a scheduler for determining a resource block to be assigned.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control message (an RRC message) for various types of setting is transmitted. The RRC layer controls the logical channel, the transport channel, and the physical channel in response to establishment, re-establishment, and release of a radio bearer. When there is an RRC connection between the RRC of the UE 100 and the RRC of the eNB 200, the UE 100 is in a connected state (an RRC connected state), and when there is no RRC connection, the UE 100 is in an idle state (an RRC idle state).

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As illustrated in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RB) in a frequency direction, and a plurality of symbols in the time direction. Each symbol is provided at a head thereof with a guard interval called a cyclic prefix (CP). The resource block includes a plurality of subcarriers in the frequency direction. A radio resource unit configured by one symbol and one subcarrier is called a resource element (RE).

Among radio resources allocated to the UE 100, a frequency resource can be specified by a resource block and a time resource can be specified by a subframe (or slot).

In the downlink, an interval of several symbols from the head of each subframe is a control region used as a physical downlink control channel (PDCCH) for mainly transmitting a control signal. Furthermore, the other interval of each subframe is a region available as a physical downlink shared channel (PDSCH) for mainly transmitting user data.

The PDCCH carries a control signal. The control signal, for example, includes an uplink SI (Scheduling Information), a downlink SI, and a TPC bit. The uplink SI is information indicating the assignment of an uplink radio resource and the downlink SI is information indicating the assignment of a downlink radio resource. The TPC bit is information for instructing an increase or decrease in the uplink transmission power. These types of information are called downlink control information (DCI).

The PDSCH carries a control signal and/or user data. For example, a downlink data region may be assigned only to the user data, or assigned such that the user data and the control signal are multiplexed.

In the uplink, both ends in the frequency direction of each subframe are control regions used as a physical uplink control channel (PUCCH) for mainly transmitting a control signal. Furthermore, the central portion in the frequency direction of each subframe is a region available as a physical uplink shared channel (PUSCH) for mainly transmitting user data.

The PUCCH carries a control signal. The control signal, for example, includes CQI (Channel Quality Indicator), PMI (Precoding Matrix Indicator), RI (Rank Indicator), SR (Scheduling Request), and ACK/NACK. The CQI is information indicating downlink channel quality and is used for deciding a recommended modulation scheme and a coding rate to be used in downlink transmission, and the like. The PMI is information indicating a precoder matrix that is preferable to be used for the downlink transmission. The RI is information indicating the number of layers (the number of streams) available for the downlink transmission. The SR is information for requesting the assignment of an uplink radio resource (a resource block). The ACK/NACK is information indicating whether or not a signal transmitted via a downlink physical channel (for example, the PDSCH) has been successfully decoded.

The PUSCH carries a control signal and/or user data. For example, an uplink data region may be assigned only to the user data, or assigned such that the user data and the control signal are multiplexed.

### (Downlink reference signal)

In a downlink, a cell-specific reference signal (CRS) and a channel-state-information reference signal (CSI-RS) are arranged to be dispersed in each subframe of a carrier. Each of the CRS and the CSI-RS is configured by a predetermined orthogonal signal sequence, and arranged in a predetermined resource element. The eNB 200 transmits the CRS and CSI-RS from each of the plurality of antennas 201. It is possible to transmit the CRS by as much as four antennas, and it is possible to transmit the CSI-RS by as much as eight antennas.

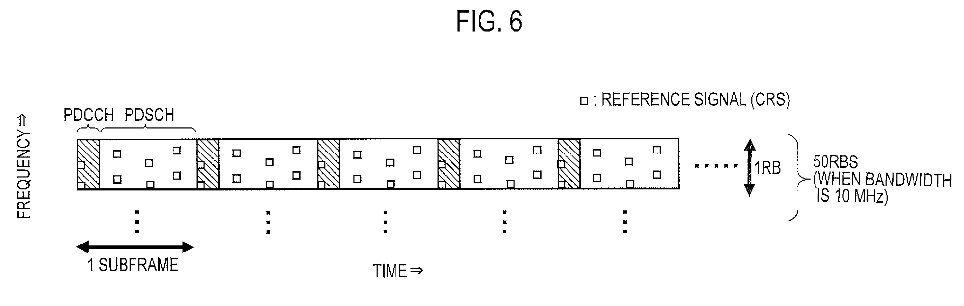

Fig. 6 is a frame configuration diagram showing an arrangement example of the CRS according to the current specification. As shown in Fig. 6, the CRSs are arranged to be dispersed in a time axis direction and a frequency axis direction. Specifically, the CRSs are arranged in all the subframes in the time axis direction. Further, the CRSs are arranged in all the resource blocks (RBs) in the frequency axis direction. It is noted that the CSI-RS is arranged in a long period, that is, once in a plurality of subframes.

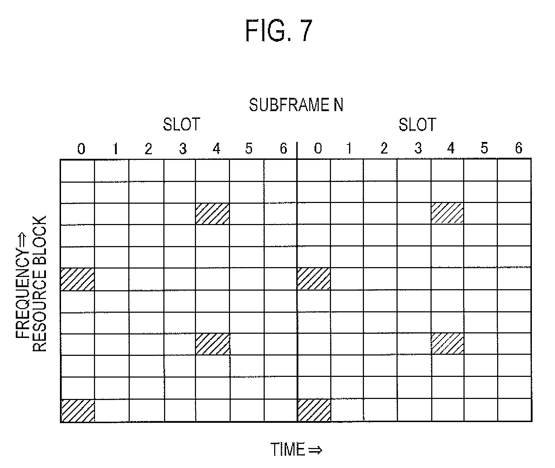

Fig. 7 is a diagram showing an arrangement example of the CRS in one subframe and one resource block. As shown in Fig. 7, four resource elements (RE) are arranged as a reference signal resource in each of first-half slots and second-half slots in one subframe (subframe N), and thus, a total of eight resource elements are arranged as the reference signal resource.

The UE 100 utilizes these reference signals to perform a channel state measurement and a received power (RSRP: Reference Signal Received Power) measurement.

The channel state measurement is a process of measuring a channel characteristic. The UE 100 measures the channel characteristic for each combination between each transmission antenna of the eNB 200 and each reception antenna of the UE 100. The UE 100 decodes the downlink data and reports channel state information (CSI), on the basis of the channel characteristic obtained from the channel state measurement. The CSI includes CQI, PMI, and RI. A process of reporting, by the UE 100, the CSI to the eNB 200 on the basis of the CRS and/or CSI-RS is called also as "CSI feedback".

The RSRP measurement is a process of measuring the RSRP indicating the received power of the CRS. The UE 100 measures the RSRP about the CRS of one transmission antenna of the eNB 200, and uses the measures RSRP for mobility control (cell re-selection control, handover control), for example.

The CRS is a reference signal introduced in 3GPP Release 8 (hereinafter, referred to as "Rel. 8"). The Rel. 8 is a first release of LTE. The UE 100 that complies with a Release following the Rel. 8, that is, all the UEs 100 that comply with the LTE, are capable of utilizing the CRS.

On the other hand, the CSI-RS is a reference signal introduced in 3GPP Release 10 (hereinafter, referred to as "Rel. 10"). The UE 100 that complies with a Release following the Rel. 10 is capable of utilizing the CSI-RS. However, the UE 100 that complies with the Rel. 8, which has a limited capability, is not capable of utilizing the CSI-RS.

Therefore, the UE 100 that complies with the Rel. 8 (low capability UE) must receive the CRS to perform the channel state measurement. On the other hand, the UE 100 that complies with a Release following the Rel. 10 (high capability UE) is capable of performing the channel state measurement by utilizing the CSI-RS, without a need of receiving the CRS.

Further, both the UE 100 that complies with the Rel. 8 and the UE 100 that complies with a Release following the Rel. 10 must receive the CRS to perform the RSRP measurement.

### (Operation according to embodiment)

Hereinafter, an operation according to the present embodiment will be described. In the present embodiment, the backward compatibility is ensured and a new carrier structure (NCT: New Carrier Type) in which the CRS is reduced can be introduced.

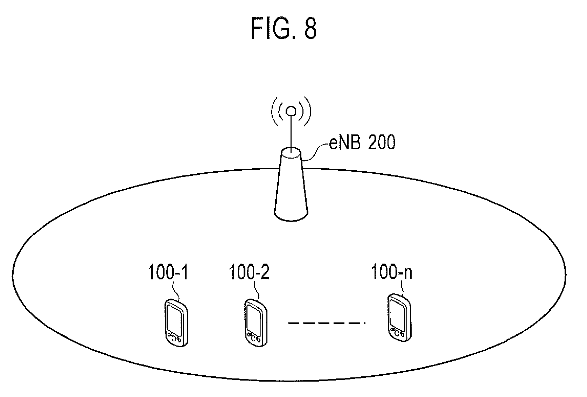

Fig. 8 is a diagram showing an operation environment according to the present embodiment. As shown in Fig. 8, each of the plurality of UEs 100 (UEs 100-1 to 100-n) is in a connected state in a cell managed by the eNB 200. The plurality of UEs 100 in the cell of the eNB 200 include UEs 100 based on various Releases.

The eNB 200 receives information indicating a communication capability from each of the plurality of UEs 100 connected to the cell of the eNB 200. In the present embodiment, the communication capability refers to a Release with which the UE 100 complies. The information indicating a Release with which the UE 100 complies is included in "UE-EUTRA-Capability" transmitted and received in an RRC layer, for example.

The eNB 200 controls to transmit the CRS on the basis of a Release with which each of the plurality of UEs 100 connected to the cell of the eNB 200 complies. In the present embodiment, the eNB 200 partially transmits the CRS when the UE (hereinafter, referred to as "Rel. 8 UE") 100 that complies with the Rel. 8 is included in the plurality of UEs 100 connected to the cell of the eNB 200.

In this case, "partially transmitting the CRS" refers to transmitting the CRS in only part of a subframe in the time direction and/or transmitting the CRS in only part of a resource block in the frequency direction. Thus, the eNB 200 transmits the CRS by limitedly using a necessary radio resource, only when the Rel. 8 UE 100 exists.

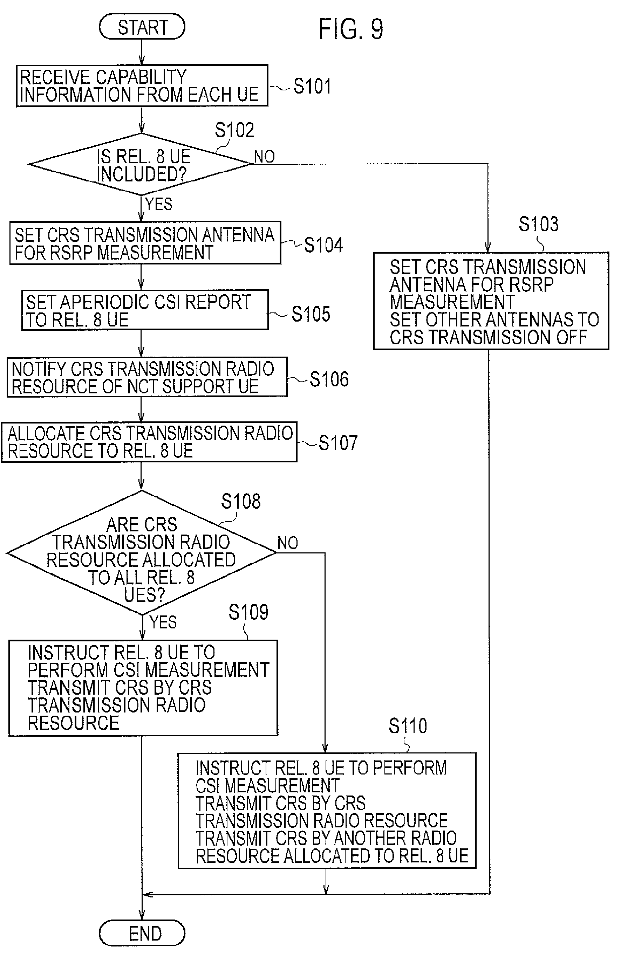

Fig. 9 is an operation flow chart of the eNB 200 according to the present embodiment. Each step in Fig. 9 is executed by the processor 240 (also by using the radio transceiver 210 and the memory 230, where necessary) of the eNB 200.

As shown in Fig. 9, in step S101, the eNB 200 transmits Release information included in the "UE-EUTRA-Capability", from each of the plurality of UEs 100 connected to the cell of the eNB 200.

In step S102, the eNB 200 determines whether or not the Rel. 8 UE 100 is included in the plurality of UEs 100 connected to the cell of the eNB 200, on the basis of the Release of each of the plurality of UEs 100 connected to the cell of the eNB 200.

When a determination result in step S102 is "NO", in step S103, the eNB 200 stops transmitting the CRS.

By stopping transmission of the CRS, the resource element in which the CRS is arranged can be used for transmitting user data. Further, even when transmission of the CRS is stopped, by continuing transmission of the CSI-RS, the UE 100 that complies with a Release following the Rel. 10 is capable of performing the channel state measurement.

It is noted that, however, the CRS is required for the RSRP measurement. Thus, if the eNB 200 stops transmitting the CRS for all the antennas 201, the RSRP cannot be measured in the UE 100.

Therefore, the eNB 200 configures the settings so that, for the RSRP measurement, the CRS is continued to be transmitted from one antenna 201 (antenna corresponding to an antenna port #0, for example) out of the plurality of antennas 201 and the CRS is stopped from being transmitted from each of the remaining antennas 201. This enables the RSRP measurement.

On the other hand, when the determination result of step S102 is "YES", the eNB 200 partially transmits the CRS in step S104. The eNB 200 configures the settings so that the CRS is transmitted in only part of a subframe in the time direction, for example. As a result, the resource element in which the CRS is arranged can be used for transmitting the user data.

It is noted that, however, the CRS is required for the RSRP measurement. Thus, if the eNB 200 partially transmits the CRS for all the antennas 201, it becomes difficult to perform the RSRP measurement in the UE 100.

Therefore, the eNB 200 configures the settings so that, for the RSRP measurement, the CRS is entirely transmitted from one antenna 201 (antenna corresponding to an antenna port #0, for example) out of the plurality of antennas 201 and the CRS is partially transmitted from each of the remaining antennas 201. This enables the RSRP measurement.

In step S105, the eNB 200 does not set a periodic report to the Rel. 8 UE, but sets an aperiodic report to the Rel. 8 UE 100, as a report to the eNB 200 regarding the CSI obtained by the channel state measurement.

Such settings of a CSI report are performed by transmitting a message of an RRC layer (RRC message) from the eNB 200 to the Rel. 8 UE 100. Setting the aperiodic CSI report to the Rel. 8 UE 100allows the Rel. 8 UE 100 to perform the channel state measurement at a timing (subframe) at which the eNB 200 transmits the CRS.

In step S106, the eNB 200 notifies the UE 100 that supports an NCT (hereinafter, referred to as "NCT support UE"), out of the UEs 100 that comply with a Release following Rel. 10, of information indicating a radio resource including the CRS (hereinafter, referred to as "CRS transmission radio resource").

The CRS transmission radio resource is notified by transmitting the RRC message from the eNB 200 to the NCT support UE 100. It is noted that the NCT support UE 100 refers to a UE 100 that complies with a Release in which the NCT is introduced. Further, the CRS transmission radio resource refers to a subframe and/or a resource block in which the CRS is arranged.

When the NCT support UE 100 is notified of the CRS transmission radio resource, the NCT support UE 100 is capable of performing the channel state measurement by utilizing not only the CSI-RS but also the CRS. It is noted that when the NCT support UE 100 is not included in the plurality of UEs 100 connected to the cell of the eNB 200, the eNB 200 may omit the process in step S106.

In step S107, the eNB 200 performs scheduling of a radio resource. The eNB 200 allocates the CRS transmission radio resource to the Rel. 8 UE 100 so that it is possible for the Rel. 8 UE 100 to decode the downlink data by utilizing the CRS.

For example, when the eNB 200 transmits the CRS in only part of a subframe, the scheduling is performed so that the radio resource (resource block) included in the part of a subframe is allocated to the Rel. 8 UE 100.

In step S108, the eNB 200 determines whether or not the CRS transmission radio resource is allocated to all the Rel. 8 UEs 100 within the cell of the eNB 200.

When a determination result in step S108 is "YES", in step S109, the eNB 200 notifies, by DCI, the Rel. 8 UE 100 of the radio resource (CRS transmission radio resource) allocated to the Rel. 8 UE 100. As a result, the Rel. 8 UE 100 is capable of receiving the downlink data by the CRS transmission radio resource, thereby normally decoding the downlink data.

Further, the eNB 200 controls the timing of the channel state measurement in the Rel. 8 UE 100 so that the Rel. 8 UE 100 performs the channel state measurement for a CSI report at a timing of the CRS transmission radio resource. Specifically, at a timing of the CRS transmission radio resource, the eNB 200 instructs, by DCI, the Rel. 8 UE 100 to perform the channel state measurement for a CSI report. As a result, the Rel. 8 UE 100 is capable of normally reporting the CSI.

On the other hand, when the determination result in step S108 is "NO", that is, when there exists the Rel. 8 UE 100 to which a radio resource other than the CRS transmission radio resource is allocated, in step S110, in addition to the process in step S109, the eNB 200 additionally transmits the CRS in the radio resource allocated to the Rel. 8 UE 100. As a result, the Rel. 8 UE 100 is capable of receiving the downlink data by the CRS transmission radio resource, and thus, it is possible to normally decode the downlink data.

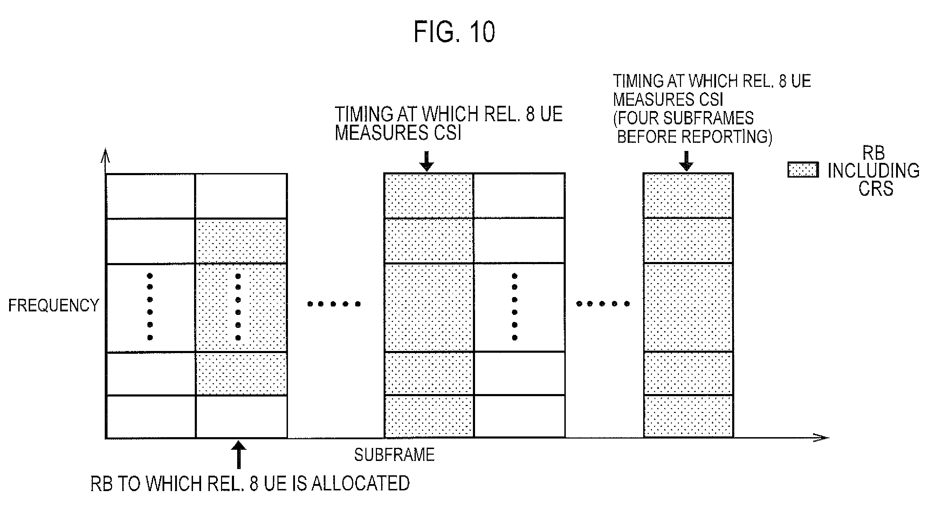

Fig. 10 is a diagram for describing a specific example of the CRS transmission. As shown in Fig. 10, the eNB 200 transmits the CRS in all the resource blocks in part of a subframe so that the Rel. 8 UE 100 is capable of performing the channel state measurement for a CSI report. Further, the eNB 200 instructs the Rel. 8 UE 100 to perform the channel state measurement in the part of a subframe.

Further, the eNB 200 allocates the resource block included in the part of a subframe to the Rel. 8 UE 100 so that the Rel. 8 UE 100 is capable of performing the channel state measurement for decoding the downlink data. It is noted that, however, when a resource block included in a subframe other than the part of a subframe is allocated to the Rel. 8 UE 100, the eNB 200 additionally transmits the CRS by the resource block.

### [Other Embodiments]

It should not be understood that the present invention is limited to the descriptions and drawings constituting a part of this disclosure. From this disclosure, a variety of alternative embodiments, examples, and operational techniques will become apparent to one skilled in the art.

In the above-described embodiment, the reduction of the CSI-RS is not particularly described; however, when all the plurality of UEs 100 connected to the cell of the eNB 200 are the Rel. 8 UE 100, transmission of the CSI-RS may be stopped.

In the above-described embodiment, an example in which the present invention is applied to the LTE system is described. However, the present invention may also be applied to systems other than the LTE system, as well as the LTE system.

Thus, note that the present invention includes various embodiments etc. that are not described herein. In addition, the above described embodiment and a modification can be combined. Therefore, the present invention is limited only by the specific features of the invention in the scope of the claims reasonably evident from the disclosure above.

In addition, the entire content of US Provisional Application No. 61/805011 (filed on March 25, 2013) is incorporated in the present specification by reference.

### INDUSTRIAL APPLICABILITY

According to the present invention, it is possible to provide a base station, a processor, and a communication control method, with which it is possible to introduce a new carrier structure while securing a backward compatibility.

## Claims

1. A base station configured to manage a cell in a mobile communication system, comprising:
a transmission unit configured to transmit a cell-specific reference signal used for channel state measurement of a downlink;
a reception unit configured to receive, from each of a plurality of user terminals connected to the cell, information indicating a communication capability of its own terminal; and
a control unit configured to controls transmission of the cell-specific reference signal on the basis of the communication capability of each of the plurality of user terminals.

2. The base station according to claim 1, wherein
the control unit performs control to partially transmit the cell-specific reference signal when a low-capability user terminal is included in the plurality of user terminals, the low-capability user terminal being not capable of performing the channel state measurement unless the cell-specific reference signal is received.

3. The base station according to claim 2, wherein
the cell-specific reference signal is also used for received power measurement of a downlink,
the transmission unit includes a plurality of transmission antennas, and
when the low-capability user terminal is included in the plurality of user terminals, the control unit performs control, for the received power measurement, to entirely transmit the cell-specific reference signal from one transmission antenna out of the plurality of transmission antennas, and to partially transmit the cell-specific reference signal from each of the remaining transmission antennas.

4. The base station according to claim 2, wherein
the control unit performs control to stop transmitting the cell-specific reference signal when the low-capability user terminal is not included in the plurality of user terminals.

5. The base station according to claim 4, wherein
the cell-specific reference signal is also used for received power measurement of a downlink,
the transmission unit includes a plurality of transmission antennas, and
when the low-capability user terminal is not included in the plurality of user terminals, the control unit performs control, for the received power measurement, to continue to transmit the cell-specific reference signal from one transmission antenna out of the plurality of transmission antennas, and to stop transmitting the cell-specific reference signal from each of the remaining transmission antennas.

6. The base station according to claim 2, wherein
when the low-capability user terminal is included in the plurality of user terminals, as a report to the base station regarding channel state information obtained by the channel state measurement, the control unit does not set a periodic report to the low-capability user terminal but sets an aperiodic report to the low-capability user terminal.

7. The base station according to claim 6, wherein
when the low-capability user terminal is included in the plurality of user terminals, the control unit controls a timing of the channel state measurement in the low-capability user terminal so that the channel state measurement for reporting the channel state information is performed at a timing of transmitting the cell-specific reference signal.

8. The base station according to claim 2, wherein
when the low-capability user terminal is included in the plurality of user terminals, the control unit allocates a radio resource including the cell-specific reference signal to the low-capability user terminal so that the low-capability user terminal is capable of decoding downlink data by utilizing the cell-specific reference signal.

9. The base station according to claim 2, wherein
when a high-capability user terminal is further included in the plurality of user terminals, the high-capability user terminal being capable of performing the channel state measurement without a need of receiving the cell-specific reference signal, the control unit performs control to notify the high-capability user terminal of information indicating a radio resource including the cell-specific reference signal.

10. A processor provided in a base station configured to manage a cell in a mobile communication system, executing:
a process of transmitting a cell-specific reference signal used for channel state measurement of a downlink;
a process of receiving, from each of a plurality of user terminals connected to the cell, information indicating a communication capability of its own terminal; and
a process of controlling transmission of the cell-specific reference signal on the basis of the communication capability of each of the plurality of user terminals.

11. A communication control method used for a base station configured to manage a cell in a mobile communication system, comprising:
a step of transmitting a cell-specific reference signal used for channel state measurement of a downlink;
a step of receiving, from each of a plurality of user terminals connected to the cell, information indicating a communication capability of its own terminal; and
a step of controlling transmission of the cell-specific reference signal on the basis of the communication capability of each of the plurality of user terminals.
